# EUROPEAN PATENT SPECIFICATION

(11) **EP 2 963 984 B1**
(45) Date of publication and mention of the grant of the patent: **07.03.2018**
(21) Application number: 14290193.3
(22) Date of filing: 30.06.2014
(51) Int. Cl.: H04W 72/04, H04W 28/18

(54) **A METHOD FOR RESOURCE ALLOCATION IN A TELECOMMUNICATION SYSTEM**
VERFAHREN ZUR RESSOURCENZUWEISUNG IN EINEM TELEKOMMUNIKATIONSSYSTEM
PROCÉDÉ D'ATTRIBUTION DE RESSOURCES DANS UN SYSTÈME DE TÉLÉCOMMUNICATION

(43) Date of publication of application: 06.01.2016
(73) Proprietor: ALCATEL LUCENT, 92100 Boulogne-Billancourt (FR)
(72) Inventor: WICH, Andreas, 70435 Stuttgart (DE); SCHAEPPERLE, Joerg, 70435 Stuttgart (DE); WIEGNER, Dirk, 71409 Schwaikheim (DE)
(74) Representative: Wetzel, Emmanuelle

(56) References cited:
- GB-A- 2 491 362
- US-A1- 2011 105 132
- US-A1- 2011 207 489
- US-B1- 6 188 905

## Description

### Technical Field

The disclosure relates to telecommunication systems, and more particularly to a method for resource allocation in a telecommunication system.

### Background

The future of mobile telecommunications brings a new perspective, where machines/devices with wide-area applications such as car based applications have to be connected to a cellular system due to its coverage properties. It is predicted that 10X to 100X machines/devices per users will be deployed by 2020 compared to X machines/devices per user today. Therefore, there is a need to improve the current telecommunication methods in order to control this predicted increase in the number of telecommunication devices.

US 2011/207489 A1 discloses a method and apparatus for opportunistic communication scheduling in a wireless communication network using motion information

### Summary

According to the present invention, a method as set forth in claim 1, a computer program as set forth in claim 12 and a control unit as set forth in claim 13 are provided. Embodiments of the invention are claimed in the dependent claims. Various embodiments provide a method and apparatus for resource allocation in a telecommunication system as described by the subject matter of the independent claims. Advantageous embodiments are described in the dependent claims.

In some embodiments, a method for optimal resources allocation in a telecommunication system, the telecommunication system comprising a control unit for controlling the telecommunication system to provide resources to service at least part of an area covered by the telecommunication system, the method comprising: determining a time and/or position dependent pattern indicative of operational statuses of a first set of telecommunication devices in the area; and controlling the telecommunication system to adjust the provided resources in accordance with the pattern to provide the resources to service the at least part of said area.

Serving or servicing an area comprises serving telecommunication devices in that area, such that, for example, the telecommunication devices can communicate.

For example, as soon as the first set of telecommunication devices enter the at least part of area, the provided resources may be adjusted to serve at least these first set of telecommunication devices in that at least part of area.

In another example, as soon as the first set of telecommunication devices located in the at least part of the area are switched on, the provided resources may be adjusted to serve at least the first set of telecommunication devices in that at least part of area during the time they are switched on. In this example, the pattern may be a time dependent pattern.

An area covered by the telecommunication system refers to an area that can be served by the telecommunication system. The area may comprise cells served by base stations of the telecommunication system.

The first set of telecommunication devices may comprise one or more telecommunication devices. The first set of telecommunication devices may comprise a known or unknown (e.g. that varies with time and/or position) number of the telecommunication devices.

The term "pattern" refers to a spatially and/or temporally varying structure of the operational behavior of one or more telecommunication devices. For example, a time dependent pattern may indicate how the telecommunication devices operate as function of time e.g. when they are switched on or off. A position dependent pattern may indicate for example the path along which the first set of telecommunication devices move (e.g. together). The term "pattern" may include a uniform or periodic pattern, a varying pattern, a random pattern, and the like. The pattern may indicate the density of telecommunication devices along the pattern in the telecommunication system. For example, for a given position (e.g. a radio cell of the telecommunication system) in the telecommunication system along the pattern, it may be determined that at least part of the first set of telecommunication devices are at that position or area (and are switched on). For example, it may be determined that the first set of telecommunication devices and another existing telecommunication device are at the same time at that position.

Providing resources may comprise allocating resources such as carriers to be used (e.g. allocating the time and frequency resources), operating or activating base stations such as femto base stations and/or optimizing handovers. A femto base station is a base station serving a femtocell.

An operational status of the first set of telecommunication devices may comprise their position (e.g. common position or location) and/or operational mode. The operational mode may comprise an active or an inactive mode during which each of the first set of telecommunication devices is switched on or off respectively. The operational mode may further comprise the amount of processing resources such as frequency bandwidth, battery, CPU, memory etc. that may be used by the telecommunication devices e.g., at a given position and/or point in time of the pattern. The operational mode may comprise the communication protocol (e.g. GSM and WCDMA) being used by the telecommunication devices.

The adjusting of the provided resources may comprise adding resources to or reducing resources from the provided resources. The adjusting may further comprise optimizing inter-cells handovers in the telecommunication system. The handover optimization may be performed by selecting a current set of configuration parameters (e.g. a handover offset, a time-to-trigger parameter) for the inter-cell handover, generating a new set of configuration parameters (e.g. by adjusting the current set of configuration parameters) for the inter-cell handover in accordance with the pattern.

For example, the pattern may indicate operational statuses of a plurality of telecommunication devices in the telecommunication system.

For example, the first set of telecommunication devices may be visiting or entering the area covered by the telecommunication system. In another example, the first set of telecommunication devices may be in the area covered by the telecommunication system.

A telecommunication device of the telecommunication devices may comprise at least one of a sensor, mobile phone, measuring device, smartphone, PDA, a laptop, a smart TV and/or any de-vice able to telecommunicate data through a radio link.

The telecommunication system may comprise an internet of things system, a machine to machine telecommunication system, a Nearfield telecommunication system like a Blue-tooth or WiFi system, a Wireless Mesh Networks system, an ad-hoc network system, a satellite telecommunication system and/or a digital wireless telecommunication system such as LTE, GSM etc

The control unit may comprise a network element of a network connecting telecommunication devices in the telecommunication system. The network element may be a node of the network or a core network element of the network.

The method may be repeated in a periodical basis e.g. every hour, day, week etc.

The above features may allow an optimal allocation of resources taking into account the behaviors (e.g. expected behaviors) of the first set of telecommunication devices inside the telecommunication system. For example, only required resources may be allocated.

Another advantage may be provided in that an efficient use of resources of the telecommunication system is ensured by, for example, reducing the amount of unused resources.

The above features may provide a preventive method that acts to beforehand prevent e.g. system congestion that may happen along the pattern. This is in contrast to prior art methods that act a posteriori for correcting for potential problems in the telecommunication system.

According to one embodiment, the controlling of the telecommunication system may further comprise configuring the first set of telecommunication devices to operate in accordance with the adjusted resources. For example, after a base station is turned on a certain carrier/spectrum band the telecommunication devices may be controlled or configured accordingly for inter-frequency measurements.

According to one embodiment, determining the pattern comprises predicting the operational statuses of the first set of telecommunication devices along the pattern using historical data describing operational behaviors of (other and/or the same) telecommunication devices in the area.

The historical data may be stored in the control unit and/or in a database server of the telecommunication system. The control unit is connected to the database server for requesting and receiving the historical data.

The historical data may comprise a log file having multiple records. Each record comprises data indicative of an operation status of at least part of the first set of telecommunication devices as function of the time and/or position of the first set of telecommunication devices.

This embodiment may be advantageous as it may provide an accurate pattern of the first set of telecommunication devices which may then further improve the efficiency of the resource allocation in the telecommunication system.

According to one embodiment, determining the pattern comprises:
- receiving from a data source data indicative of the first set of telecommunication devices, the data having a predetermined format corresponding to temporal and/or spatial structure supported by the data source. For example, the data source may use a first coordinate system for positioning the first set of telecommunication devices. The data source may comprise a computer or other processing device that may or may not be part of the telecommunication system.
- transforming the received data into a format corresponding to temporal and/or spatial structure of the telecommunication system. For example, the telecommunication system may use a second coordinate system for positioning the first set of telecommunication devices. and
- generating from the transformed data the pattern.

According to one embodiment, the method further comprises determining a second pattern indicative of operational statuses of at least a second set of telecommunication devices in the area; correlating the first and second patterns for determining a dependency value between the two patterns; controlling the telecommunication system to adjust the provided resources in accordance with the dependency value to provide resources to at least the first and second set of telecommunications devices. Correlating the first and second patterns may comprise comparing the first and second patterns.

The dependency value may comprise the density of the telecommunication devices in the area.

The second set of telecommunication devices may be entering the area or may be part of telecommunication system. The second pattern may coincide with the first pattern in at least a portion of the first pattern. For example, the first set of telecommunication devices may be at a given position at a certain point in time and the second set of telecommunication devices may be at the same position and at the same point in time.

The second pattern may be determined using the method of the determination of the first pattern. The first and second patterns may be determined using information describing operational behaviors of both the first and second set of telecommunication devices.

According to one embodiment, the dependency value comprises at least one of:
- the number of sets of telecommunication devices of the first and second set of telecommunication devices that coincident in time and/or position while operating. The coincidence in time of the at least first and second set of telecommunication devices may occur, for example, when the first and second set of telecommunication devices are connected to two different base stations and are linked via interference i.e. their telecommunication links to the base stations may interfere. In this case, the first and second set of telecommunication devices may not coincide in position or location but their operation is interdependent in time. The first and second set of telecommunication devices may coincide in position for example if they belong to a same cell or sector of a cell served by a base station. The term "position" refers to the location within the network structure of the telecommunication system or to a geographical position that may be given as coordinates or degrees.
- an estimated system load of the telecommunication system caused by the operation of the first and second set of telecommunication devices at the same time and/or same position. For example, the number of telecommunication devices may influence the system load status for the telecommunication system (e.g. the higher the number of telecommunication devices operating at the same time, the higher the system load). The system load may be a data traffic load in the telecommunication system.

These embodiments may be advantageous as they may further optimize the resource allocation in the telecommunication system in particular for telecommunication devices having not the same patterns in the telecommunication system.

According to one embodiment, the telecommunication system comprises a plurality of base stations serving respective macro cells and pico-cells, wherein controlling the telecommunication system comprises selecting one or more base stations of the plurality of base stations that serve the first set of telecommunication devices along the pattern; assigning in accordance with the pattern an operation weight value to at least part of the one or more base stations; controlling at least one parameter of the one or more base stations such that the one or more base stations function in accordance with the operation weight values.

For example, the base stations having a weight value higher than a predetermined weight threshold value may be switched on or may be assigned more resources than the base stations having a weight value below the predetermined weight threshold value.

For example, the operation weight value may be determined based on the powering source (e.g. a battery status) used by the base stations. For example, base stations supplied by energy harvesting techniques, may have a higher prioritization of use i.e. higher operation weight value, compared to base stations, which are fully supplied by power grid.

In another example, the operation weight value may be determined based on the network operator to which the first set of telecommunication devices belong. The base stations belonging to said network operator may have a higher prioritization of use i.e. higher operation weight value, compared to base stations of other network operators.

In a further example, the operation weight value may be determined based on the number of telecommunication devices that will be served by each of the base stations along the pattern. The higher the number of served telecommunication devices by a base station the higher the operation weight value of the base station.

The operation weight value may be determined by the impact the expected load situation/shift may have on the network environment of the telecommunication system, e. g. pushing load on an individual base station may lead to increased interference on its neighboring base stations, which in turn have to adjust their operation mode accordingly.

According to one embodiment, controlling the at least one parameter of the one or more base stations comprises at least one of:
- turning on the turned off base stations of the one or more base stations. For example, the base stations having higher weight values (e.g., higher than a predetermined minimum weight value) may be switched on if they were switched off before.

- turning off a turned on base station of the one or more base stations. For example, the base stations having lower weight values (e.g., lower than the predetermined minimum weight value) may be switched off if they were switched on before.
- controlling the mechanical antenna characteristics of the one or more base stations;
- controlling antenna beams of the one or more base stations;
- controlling the parameter indicative of the transmission power of the one or more base stations to change the transmission power. For example, the transmission power may be adapted in dependence with the number of served telecommunication devices.
- spectrum off-loading or channel allocation between base stations. For example the begin of operation on a new channel/carrier previously not used by a given base station for capacity enhancement but possibly already in use by a surrounding base station or co-channel macro base station; which may have to cease or adapt its operation on such a carrier for interference reasons.

These embodiments may be advantageous as they may further optimize the resource allocation in the telecommunication system by enabling an overall control of the telecommunication system components.

According to one embodiment, the method further comprises determining non overlapping cells served by at least part of the one or more base stations along the pattern; sharing allocated resources between the cells as function of the operational statuses of the first set of telecommunication devices. This may further optimize resources allocation in the telecommunication system.

According to one embodiment, the determining of the pattern comprises:
- connecting by the control unit to a service provider server;
- requesting from the service provider server a pattern of operational statuses of a second set of telecommunication devices in at least a portion of the pattern; wherein the controlling of the telecommunication system is performed using the operational statuses of the first and second set of the telecommunication devices.

According to one embodiment, the pattern further indicates required resources usage of the first set of telecommunication devices along the pattern.

According to one embodiment, the method further comprises detecting a technical dysfunction in the area expected to affect the operation of the first set of telecommunication devices in at least a portion of the pattern; re-determining the pattern by predicting the pattern in accordance with the technical dysfunction, wherein controlling the telecommunication system is performed using the predicted pattern.

For example, the technical dysfunction may cause an unexpected continuous increase (till the dysfunction is repaired) in the number of telecommunication devices that may be served by a given base station along the pattern. In this case, the control of the telecommunication system may prevent a system congestion that may be caused by such increase of the number of telecommunication devices, by increasing the provided resources (e.g., switching on more femto base stations in the vicinity of that base station).

According to one embodiment, the first set of telecommunication devices comprise vehicle-mounted or connected telecommunication devices, wherein the pattern of the first set of telecommunication devices is determined using information describing an operational behavior of the vehicle.

The operational behavior of the vehicle may influence the operational behavior of one or more of the first set of telecommunication devices. The pattern of the telecommunication devices may correspond to the operational behavior pattern (in time and/or space) of the vehicle. For example, a movement of the vehicle may correspond to the same movement of the telecommunication device, in case the device is inside the vehicle. The real number of telecommunication devices may be unknown. For example, the provided resources may be adjusted as at given position of the vehicle on the pattern as a potential number telecommunication devices may cause a load. In another example, the switching on (off) of the vehicle may trigger the switching on (off) of a telecommunication device (i.e. although the vehicle may be at given fixed position its pattern may be a time dependent pattern that indicates for example when it is switched on or off) and thus the provided resources may be adjusted accordingly.

The information may comprise for example a timetable or time schedule of the vehicle.

The information may be provided by a navigation system monitoring the movement of the vehicle. The navigation system may include a positioning device. The positioning device is based on a positioning system such as the global positioning system (GPS), for determining the vehicle's position. The navigation system may provide information about the future like an intended destination and a route of the vehicle (i.e. the telecommunication devices) in the form of location data versus time.

According to one embodiment, the control unit is connected to a service provider server (or a data source). The method further comprises controlling the service provider server for retrieving (or requesting) information describing operational behaviors of the first set of telecommunication devices from the service provider server, wherein determining the pattern is performed using the retrieved information.

For example, the service provider server may be controlled to act as a slave device of the control unit in a master-slave configuration where the control unit may act as a master device such that the control unit may access, retrieve and/or request the information as soon as needed (e.g. in a periodical basis) by the control unit.

According to one embodiment, the retrieving of the information is automatically performed in a periodical basis (e.g. every day, hour, week etc.) and/or upon detecting a change in the information. For example, the service provider server may be controlled to alert the control unit as soon as a change is detected by the service provider in the information and in response the control unit may retrieve the changed information e.g. for updating the determined pattern and therefrom the adjusting of the resources in the telecommunication system. In another example, the control unit may have a regular access (e.g. every hour or minute etc.) to the information collected/stored by the service provider server and may detect a change in the information and in response it may retrieve the changed information.

In an alternative example, the information required for determining the pattern may be generated or collected by the control unit e.g. by maintaining historical data describing the movement and/or function habits of the telecommunication devices.

In some embodiments, a control unit of a telecommunication system configured to perform one or more method steps of the above embodiments.

It is understood that one or more of the aforementioned embodiments may be combined as long as the combined embodiments are not mutually exclusive.

### Brief description of the drawings

In the following embodiments of the disclosure are explained in greater detail, by way of example only, making reference to the drawings in which:
Figure 1 shows an exemplary telecommunication system,
Figure 2 shows a further exemplary telecommunication system,
Figure 3 shows entities of a control unit of the telecommunication system, and
Figure 4 is a flowchart of a method for resource allocation in a telecommunication system.

### Detailed description

In the following, like numbered elements in these figures are either similar elements or perform an equivalent function. Elements which have been discussed previously will not necessarily be discussed in later figures if the function is equivalent.

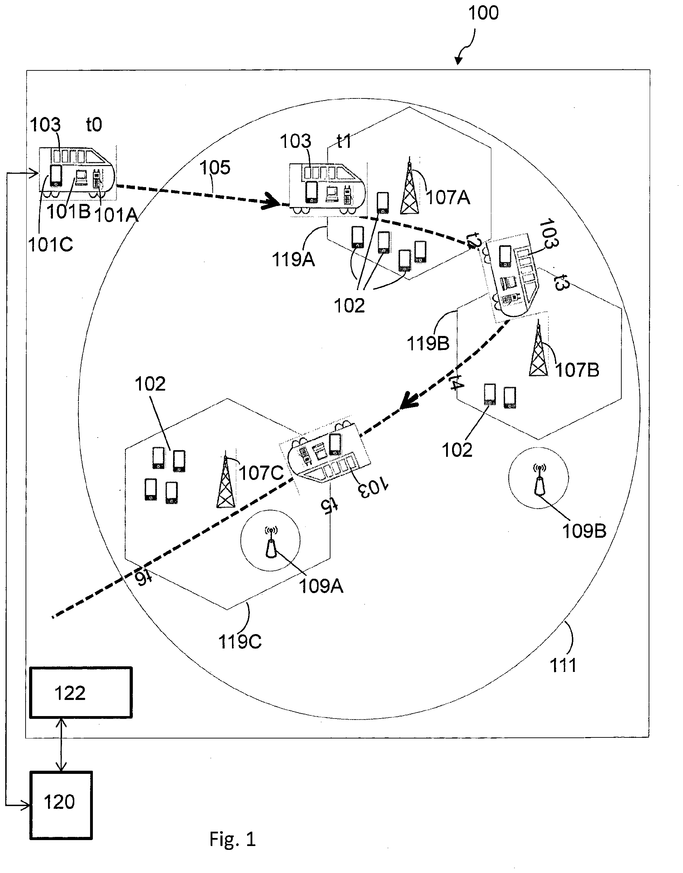

Fig. 1 illustrates a simplified structure of a telecommunication system 100. The telecommunication system 100 comprises an access network 111. The access network 111 may comprise a Long Term Evolution (LTE) network. The access network 103 is distributed over land sites called cells e.g. 119A-C, each served by a base station 107A-C that creates a radio coverage in that cell 119A-C. The base station 107 may be for example an Evolved Node-Bs (eNBs). The base station 109A-B may be a femto-base station. In another example, the access network may comprise a wired telecommunication network or a wireless telecommunication network. In a further example, the access network may comprise a wireless ad-hoc network acting as a self-configuring network of mobile routes e.g. 107A-C connected by wireless links.

The telecommunication system 100 comprises one or more telecommunication devices 101A-C. The telecommunication devices 101A-C may be mounted or connected to a vehicle 103 such as a bus, a train etc.

The telecommunication device 101A-C may comprise at least one of a sensor, mobile phone, measuring device, smartphone, PDA, a laptop, a smart TV and/or any device able to telecommunicate data through a radio link.

The telecommunication system 100 may further comprise a control unit 122. The control unit 122 may be a central control unit such as a unit of a core network element that controls the components of the access network 111. The core network element may be, for example, a mobile switch center (MSC) or a base station controller (BSC). In an alternative example, the control unit 122 may be a unit installed in at least part of the base stations 107A-C.

The control unit 122 may control the telecommunication system 100 to provide resources to telecommunication devices 102 in the telecommunication system 100, for example by providing resources to an area covered by the telecommunication system 100, wherein the telecommunication device 102 is spatially located within said area. Providing resources may comprise, for example, allocating resources such as frequency bandwidths and/or activating one or more base stations.

The telecommunication system 100 may be connected to a computer server 120 or a data source (e.g. a processing and/or storage device). The computer server 120 may control the operation of the vehicle 103. For example, the computer server 120 may control the operation of the vehicle 103 to follow the pattern 105. Since the telecommunication devices 101A-C may be mounted to the vehicle 103, this implies that the one or more telecommunication devices 101A-C follow the pattern 105 as well. The computer server 120 may be or may comprise a navigation system. The computer server 120 may or may not be part of the telecommunication system 100. The computer server 120 may be mounted or connected to vehicle 103.

For example, the computer server 120 may provide information. The information may indicate traffic densities (e.g. density of vehicles as a function of location and time, maxima and minima of that function etc.) and a prediction of their "mid-term" changes (first derivative with respect to time). The information may further comprise speed, position, destination of the transport of the telecommunication devices 101A-C (i.e. the vehicle 103) and further navigation system related data.

This information may additionally be related to known data with respect to data traffic characteristics like data traffic jams or slow data traffic along the pattern 105. The information may further indicate possible routes a vehicle mounted telecommunication device could take, speed limits of vehicle-mounted telecommunication devices. This may indicate the delay that may occur when the vehicle moves along the pattern 105.

The information may further comprise timetables, or schedules of telecommunication devices functions or of the vehicle 103.

The information may comprise the number of telecommunication devices 101A-C e.g. in the vehicle 103. The number may be a predicted number. The prediction may again be time and location dependent.

The computer server 120 may provide said information upon receiving a request from the control unit 122. In another example, the computer server 120 may automatically send said information to the control unit 122, for example, on a periodical basis. e.g. as soon as the computer server 120 detects a predefined change (with respect to lastly submitted information) in the information related to a telecommunication device.

For example, the computer server 120 may detect a technical dysfunction related to the movement of the vehicle. As a consequence, since the telecommunication devices 101A-C are located on the vehicle, the movement of the telecommunication devices 101A-C is also affected. Thus, this may be interpreted as a technical dysfunction in the telecommunication system 100 with respect to the telecommunication devices 101A-C in at least a portion of the pattern 105. This may for example cause delay in the movement of the telecommunication devices 101A-C along that portion of the pattern 105. The detection of the technical dysfunction may trigger the submission of that information to the control unit 122. In alternative example, the technical dysfunction may be detected by the control unit 122. In an emergency situation arising from the technical dysfunction of the vehicle, the reaction of the telecommunication system may be a supernumerary increase of mobile telecommunication resources to the spatial area in which the dysfunction occurred in order to permit a proper handling of emergency calls any by mobile telecommunication devices.

By scheduling the operation e.g. the movement of the vehicle 103 by the computer server 120, the operation e.g. the movement of the telecommunication devices 101A-C that are mounted to the vehicle 103 is also scheduled. For example, the computer server 120 schedules the vehicle 103 to move along the pattern 105 which means that the one or more telecommunication devices 101A-C are also constrained to that pattern 105 as soon as they are mounted or connected to the vehicle 103 or located within the vehicle 103.

The control unit 122 may determine the pattern 105 of the telecommunication devices 101A-C (i.e. the vehicle 103) using the information described above. For example, the determination of the pattern (e.g. 105) may be periodically performed by analyzing the real live pattern of existing telecommunication devices 102 in the access network 111. In another example, the control unit 122 may determine the pattern 105 at a given point in time before, at or after the time t0, at which the vehicle entered the area covered by the access network 111.

In an alternative example, the determination of the pattern may be performed by requesting that pattern 105. In this example, the control unit 122 may connect to the computer server 120 for requesting the pattern 105 of the telecommunication devices 101A-C. In a further alternative example, the control unit 122 may request and receive from the computer server 120 historical data of the telecommunication devices 101A-C or the vehicle 103. The historical data may indicate the telecommunication device's movement habits that may enable creation of movement profiles. The movement profiles may be used for prediction of the pattern 105. Using the received historical data, the control unit 122 may predict the pattern 105.

In a further alternative example, the control unit 122 may receive from the computer server 120 information indicating the network connection attitude of the telecommunication device 101A-C. That is, the control unit 122 may receive information on whether a telecommunication device 101A-C requires continuous connection or only sporadic connection and at which time intervals. This information may be used for example for predicting a time dependent pattern.

The pattern 105 shown in Fig. 1 may indicate, for example, the spatial path of the telecommunication devices 101A-C or the vehicle 103. The pattern 105 may indicate that the telecommunication devices 101A-C may enter at time t1 and leave at time t2 the cell 119A served by the base station 107A. The pattern 105 may further indicate, that the telecommunication devices may enter at time t3 and leave at time t4 the cell 119B served by the base station 107B. The pattern 105 may further indicate, that the telecommunication devices may enter at time t5 and leave at time t6 the cell 119C served by the base station 107C. The pattern 105 may be stored as a computer file and/or a table (e.g. having entries indicating the position and time of the telecommunication devices 101A-C) in the control unit 122.

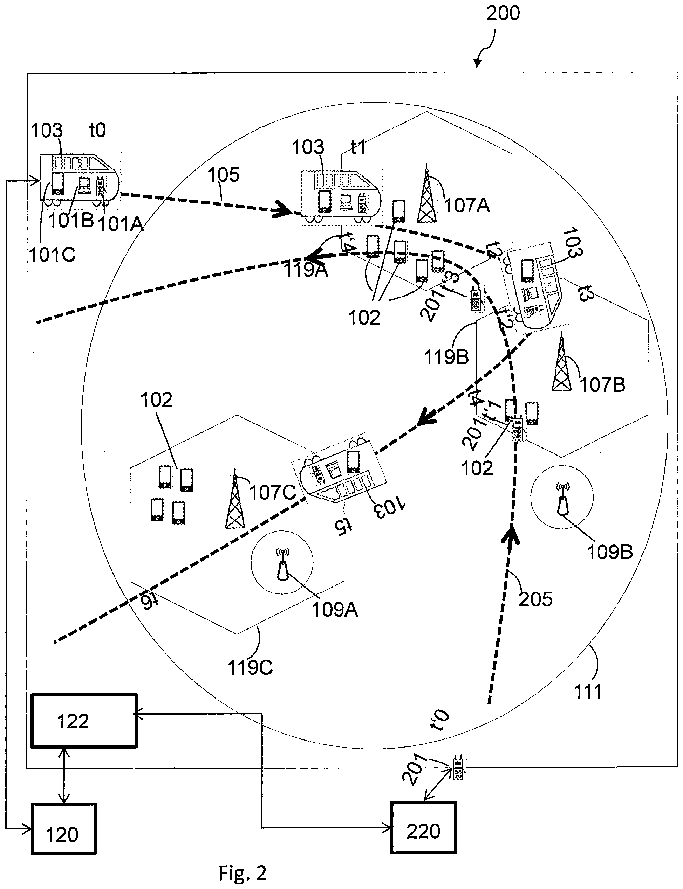

The cells are depicted in Figs. 1 and 2 as idealized circles or polygons in the interest of clarity and to avoid obscuring the description. However, persons of ordinary skill in the art should appreciate that cells typically have an irregular and variable shape that is determined by numerous factors including, but not limited to, transmission powers of the base stations, transmission power distributions of the base stations, physical obstacles, changing environmental conditions, and the like.

Using the pattern 105, the control unit 122 may control the telecommunication system 100 to adjust the provided resources in accordance with the pattern 105 to provide resources to the telecommunication devices 102 including the telecommunication devices 101A-C. For example, the telecommunication system 100 may be controlled to switch on the femto-base station 109A during the time interval [t5, t6] defined by the time t5 and t6 at which the telecommunication devices 101A-C enter and leave the cell 119C respectively. This may help in case the number of telecommunication devices in the cell 119C exceeds a maximum allowed number of devices that can be served by the base station 117C.

In another example, the telecommunication system 100 may be controlled to switch off the femto base station 109B as it may not be needed/used along the pattern 105. For example, the control unit 122 when it is centrally installed in the telecommunication system 100 may control the base station 117C (e.g. by sending a request to the base station 117C) to adapt its scheduling in a way that it may preferably schedule resources (e.g. frequency bandwidth and/or time slots) for the telecommunication device 101A-C and 102 that are in cell 119C. In another example, the control unit 122 being part of the base station 117C may adapt scheduling of the base station 117C in a way that it may preferably schedule resources (e.g. frequency bandwidth and/or time slots) for the telecommunication device 101A-C and 102 that are in cell 119C.

The telecommunication system 100 may also be controlled by adjusting its parameters such as handover parameters (e.g. a handover offset, a time-to-trigger parameter) and long-term antenna tilts and/or by beam forming pattern optimization (e. g. choosing different codebooks optimized for certain directions etc.).

The telecommunication system 100 may be controlled for optimizing radio access network (RAN) e.g. 111 parameters and allowing for a dynamic operation of the RAN.

Using the pattern 105, the control unit 122 may adapt or adjust parameters on the telecommunication devices. For example, after a base station is turned on on a certain carrier/spectrum band and the telecommunication devices may be controlled or configured for inter-frequency measurements.

Fig. 2 shows another exemplary telecommunication system 200. Fig. 2 comprises the elements of Fig. 1. In addition, telecommunication system 200 comprises a telecommunication device 201.

In addition to pattern 105 of the telecommunication devices 101A-C, the control unit 122 may determine the pattern 205 of the telecommunication device 201. The control unit 122 may connect to computer server or data source 220 to determine the pattern 205 of the telecommunication device 201 e.g. by requesting information on the telecommunication device 201. The computer server 220 may or may not be part of the computer server 120.

The pattern 205 may indicate, for example, the current or expected spatial path of the telecommunication device 201. The pattern 205 may indicate that the telecommunication device 201 may enter at time t'1 and leave at time t'2 the cell 119B served by the base station 107B. The pattern 205 may further indicate, that the telecommunication device 201 may enter at time t'3 and leave at time t'4 the cell 119A served by the base station 107A.

The control unit 122 may correlate the two patterns 105 and 205 to determine the dependencies between the two patterns. For example, by correlating the two patterns 105 and 205 the control unit 122 may deduce that the time intervals [t1, t2] and [t'3, t'4] overlaps at least partially. That is, the cell 119A may comprise at least both the telecommunication devices 101A-C and the telecommunication device 201 during the overlapping time between the time intervals [t1, t2] and [t'3, t'4].

The control unit 122 may thus control the telecommunication system 200 to provide resources taking into account the outcome of the correlation between the two patterns 105 and 205. In particular, it may control the telecommunication system to provide more resources than the one provided in the configuration of Fig. 1 during time interval [t1, t2].

For simplicity of the description, the patterns 105 and 205 are shown as position dependent patterns. However, a skilled person having access to the present disclosure will understand that a time dependent and/or position dependent pattern may also be determined.

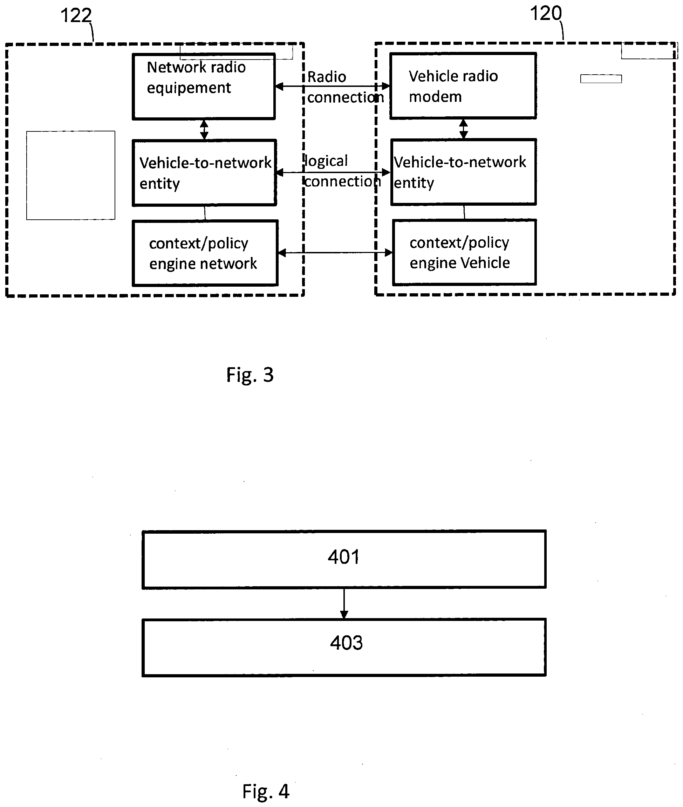

Fig. 3 shows entities of control unit 122 and computer server or a data source 120 that may be used for exchanging data between the computer server 120 and the control unit 122. The computer server 120 may comprise a radio modem for transmitting or exchanging data e.g. over a wireless connection to the control unit 122 comprising a network radio entity. The transmission may be done via a point-topoint or -multipoint link between the computer server 120 and the control unit 122. The entities may form different levels of an application stack that defines a protocol for exchanging, treating information in order to adjust or optimize the resource allocation in the telecommunication system e.g. 100 using the pattern. The computer server 120 may be comprised in the vehicle 103. The computer server 120 may comprise an entity connected to the navigation system of vehicle 103.

In case the computer server 120 is part of the telecommunication system 100 the exchange of data between the computer server 120 and the control unit 122 may be performed using a communication protocol supported by the telecommunication system 100 e.g. an LTE, a Bluetooth protocol and the like.

For example, the computer server 120 may comprise a context and policy engine that is controlled, to for example exclude or include certain telecommunication devices from the measurement or trigger new measurements and messages when e.g. a parameter deviate for a certain delta value (speed change of a telecommunication device e.g. 201, specific route is taken by the telecommunication device e.g. 201, etc.) and alerts the control unit 122 in case of unusual or exceptional events - such as a technical dysfunction detection.

The "vehicle-to-network-entities" of Fig. 3 are the termination points for the data exchange between the control unit 122 and the computer server 120. They may be the lowest entities in the application stack. The vehicle-to-network-entities may collect, aggregate and prepare the data for the subsequent pattern prediction and the resources adjustment. For example, if the data received by the vehicle-to-network entity of the control unit is received in a predefined format (e.g. a timetable indicating a time schedule of a telecommunication device movement from a first position to a target position) the vehicle-to-network entity may transform the received data into a format corresponding to temporal and/or spatial structure of the telecommunication system (e.g. the first and target positions may be redefined in term of radio cell position or base station position in the telecommunication system) such that it can be used for determining the pattern. The vehicle-to-network-entities after preparing the data may for example transmit it to a next level entity in the application stack of the control unit 122 for the pattern determination and the resource adaptation.

The context/policy engines may be service control entities for the optimization on a low level, e. g. the network side engine (of control unit 122) configures and triggers on-shot/periodical measurements of a certain device and parameterizes the device side thresholds for responses in case of deviating measurement values. e. g. once a path with time annotation is delivered from the computer server 120 to control unit 122, any deviation of 100m / 30s may be noteworthy for the network planning.

The device/vehicle side entity (of computer server 120) may be as slave to the network side entity (of control unit 122), triggering the collection of data, collecting the data and delivering it to the vehicle-to-network entity (of control unit 122) for transmission to the network entity, thus being the intelligence or the next layer in the application stack for the network optimization.

The navigation system of the computer server 120 may provide data for telecommunication devices 101A-C, 201 in the form of data pairs of position and time *(t_{i,n},x_{i,n})* where *t* is time, *x* is the location, *i* is the index of a telecommunication device 101A-C, 201, and *n* is the index of a data point for that telecommunication device.

Since the navigation system is a planning tool, at least a part of the data provided may indicate future operation of the telecommunication devices 101A-C, 201. From the data provided by the navigation system a forecast of the distribution of telecommunication devices (i.e. pattern 105 and 205) may be derived by the control unit 122. Especially the telecommunication devices density or expected traffic density per area or the number of telecommunication devices or the total traffic in a given area can be estimated. This forecast can be used to adapt the provision of resources in the telecommunication system 100 and 200 according to the forecast. Parameters to be adapted can, e.g., be frequency allocations or mechanical antenna parameters (azimuth, tilt), etc.

For example, the pattern 105 or 205 may be determined using the density of telecommunication devices in the following way:
A certain geographical area covered by the access network 111 may be divided into non-overlapping cells *A =* {*A*₁,*A*₂,...,*A_{N}*} that may or may not coincide with radio cells 119A-C. If subsequent position-time pairs of a telecommunication device 101A-C, 201 are in different cells, the number of telecommunication devices in one cell is increased and that of the other cell is decreased between the two time coordinates of the two data pairs i.e., having two subsequent data points (*t_{i,n},x_{i,n}*) and (*t*_{*i,n*+1}*,x*_{*i,n*+1}), and *x_{i,n}* is in *Aⱼ* and *x*_{*i,n*+1} in *Aₖ,* where both *t_{i,n}* and *t*_{*i,n*+1} may be in the future, then the number of telecommunication devices *Kⱼ* and *Kₖ* in cells *j* and *k* are modified in the following way: *K*_{*j,n*+1} = *K_{j,n}*-1, *K*_{*k,n*+1} = *K_{k,n}*+1. This process may be repeated for all telecommunication devices to be tracked i.e., for which the pattern may be determined.

In that way the evolution of the spatial distribution of telecommunication devices over time may be forecasted. Typical timescales for this evolution are minutes or hours corresponding to the typical planning intervals of navigation systems.

Using that forecast, e.g., radio frequencies used to handle peak loads can be allocated from a cell with decreasing user density to a cell with increasing user density. Or antenna directions can automatically be modified so that they point towards areas with higher user densities i.e. the forecast allows proactive adaptation of radio parameters that cannot be changed very quickly, and better knowledge on the duration of a specific situation may be extracted to prevent "ping-pong" optimization.

Instead of forecasting telecommunication devices densities each telecommunication device can be assigned an expected average data rate. In this way the expected traffic load can directly be estimated.

If the cells for the user density forecast are smaller than the radio cells, a mapping between the two types of cells can be used to make a forecast of user of traffic densities within a large radio cell. This allows the proactive adaptation of intra-cell configuration parameters.

Fig. 4 is a flowchart of a method for resource allocation in a telecommunication system (e.g. 100). The telecommunication system comprises a control unit for controlling the telecommunication system to provide resources to service at least part of an area covered by the telecommunication system.

In step 401, a time and/or position dependent pattern indicative of operational statuses of a first set of telecommunication devices in the area is determined.

In step 403, the telecommunication system is controlled to adjust the provided resources in accordance with the pattern to provide the resources to service the at least part of said area.

For example, steps 401-403 may be repeated for other telecommunication devices. This may result in one or more patterns that may comprise the pattern of the first set of telecommunication devices. In case, more than one pattern is determined a correlation (e.g. spatial and/or temporal correlation) between the more than one patterns may be performed and based on that correlation the telecommunication system may be controlled to adjust the provided resources.

### List of reference numerals

- 100: communication system
- 101: communication device
- 102: communication device
- 103: vehicle
- 105: pattern
- 107: base station
- 109: femto base station
- 111: access network
- 119: cell
- 120: computer server
- 122: control unit
- t1-t6: time
- 200: communication system
- 201: communication device
- 205: pattern
- 220: computer server
- t'1-t'4: time.

## Claims

1. A method for optimal resources allocation in a telecommunication system (100, 200), the telecommunication system (100, 200) comprising a control unit (122) for controlling the telecommunication system (100, 200) to provide resources to service a part of an area covered by the telecommunication system (100, 200), the method comprising: determining a time and/or position dependent pattern (105, 205) indicative of operational statuses of a first set of telecommunication devices (101A-C, 201) in the area; wherein an operational status of a device indicates the movement path and "on" or "off' status of the device; and controlling the telecommunication system (100, 200) to adjust the provided resources in accordance with the pattern (105, 205) to provide the resources to service the part of said area; wherein the method further comprises
determining a second pattern (205) indicative of operational statuses of at least a second set of telecommunication devices (201) in the area; correlating the first (105) and second (205) patterns for determining a dependency value between the two patterns;
controlling the telecommunication system (200) to further adjust the provided resources in accordance with the dependency value to provide resources to at least the first and second set of telecommunications devices, wherein the dependency value comprises at least one of the number of telecommunication devices of at least the first and second set of telecommunication devices that are coincident in time and/or position while operating; an estimated system load of the telecommunication system caused by the operation of at least the first and second set of telecommunication devices at the same time and/or same position.

2. The method of claim 1, wherein determining the pattern (105, 205) comprises predicting the operational statuses of the first set of telecommunication devices (101A-C, 201) along the pattern (105, 205) using historical data describing operational behaviors of the first set of telecommunication devices (101A-C, 201) in the area.

3. The method of claim 1 or 2, wherein the first set of telecommunication devices (101A-C) comprise vehicle-mounted or connected telecommunication devices, wherein the pattern of the first set of telecommunication devices (101A-C) is determined using information describing operational behaviors of the vehicle (103).

4. The method of any of preceding claims, wherein determining the pattern (105, 205) comprises:
- receiving from a data source data (120) indicative of the first set of telecommunication devices (101A-C, 201), the data having a predetermined format corresponding to temporal and/or spatial structure supported by the data source (120);
- transforming the received data into a format corresponding to temporal and/or spatial structure of the telecommunication system (100, 200); and
- generating from the transformed data the pattern (105, 205).

5. The method of any of the preceding claims, the telecommunication system (100, 200) comprising a plurality of base stations (107, 109) serving respective macro cells and pico-cells, wherein controlling the telecommunication system comprises:
- selecting one or more base stations of the plurality of base stations (107, 109) that serve the first set of telecommunication devices (101A-C, 201) along the pattern (105, 205);
- assigning in accordance with the pattern (105, 205) an operation weight value to at least part of the one or more base stations;
- controlling at least one parameter of the one or more base stations such that the one or more base stations function in accordance with the operation weight values.

6. The method of claim 5, wherein controlling the at least one parameter of the one or more base stations comprises at least one of:
- turning on the turned off base stations of the one or more base stations;
- turning off a turned on base station of the one or more base stations;
- controlling the mechanical antenna characteristics of the one or more base stations;
- controlling antenna beams of the one or more base stations;
- controlling the parameter indicative of the transmission power of the one or more base stations to change the transmission power;
- spectrum off-loading or channel allocation between base stations;

7. The method of claim 5 or 6, further comprising:
- determining non overlapping cells served by at least part of the one or more base stations along the pattern;
- sharing allocated resources between the cells as function of the operational statuses of the first set of telecommunication devices (101A-C, 201).

8. The method of any of the preceding claims, wherein the determining comprises:
- connecting by the control unit (122) to a service provider server (120);
- requesting from the service provider server (120) a pattern of operational statuses of the second set of telecommunication devices in at least a portion of the pattern (105); wherein the controlling of the telecommunication system is performed using the operational statuses of the first and second set of telecommunication devices.

9. The method of any of the preceding claims, wherein the pattern (105, 205) further indicates required resources usage of the first set of telecommunication devices (101A-C, 201) along the pattern (105, 205).

10. The method of any of the preceding claims, further comprising: detecting a technical dysfunction in the area expected to affect the operation of the first set of telecommunication devices in at least a portion of the pattern (105, 205); re-determining the pattern by predicting the pattern in accordance with the technical dysfunction, wherein controlling the telecommunication system (100, 200) is performed using the predicted pattern.

11. The method of any of preceding claims, wherein the control unit is connected to a service provider server, the method further comprising:
- controlling the service provider server (120) for retrieving information describing operational behaviors of the first set of telecommunication devices from the service provider server (120), wherein determining the pattern is performed using the retrieved information.

12. A computer program comprising computer program code means adapted to perform the steps of the method according to any one of claims 1-11 when said program is run in a computer.

13. A control unit (122) of a telecommunication system (100, 200) configured to perform one or more method steps of claims 1-11.

## Patentansprüche

1. Verfahren für eine optimale Ressourcenzuweisung in einem Telekommunikationssystem (100, 200), wobei das Telekommunikationssystem (100, 200) umfasst eine Steuereinheit (122) zum Steuern des Telekommunikationssystems (100, 200) zum Bereitstellen von Ressourcen, um einen Teil eines Bereichs zu bedienen, der von dem Telekommunikationssystem (100, 200) abgedeckt wird, wobei das Verfahren umfasst: Bestimmen eines zeit- und/der positionsabhängigen Musters (105, 205), das indikativ ist für den Betriebsstatus eines ersten Satzes von Telekommunikationsgeräten (101A-C, 201) in dem Bereich; wobei ein Betriebsstatus eines Geräts den Bewegungspfad und den "An-" bzw. "Aus-"Status des Geräts anzeigt; und Steuern des Telekommunikationssystems (100, 200) zum Einstellen der bereitgestellten Ressourcen gemäß dem Muster (105, 205) zum Bereitstellen der Ressourcen zum Bedienen des Teils besagten Gebiets;
wobei das Verfahren weiterhin umfasst das Bestimmen eines zweiten Musters (205), das indikativ ist für den Betriebsstatus des mindestens zweiten Satzes von Telekommunikationsgeräten (201) in dem Bereich; Korrelieren der ersten (105) und zweiten (205) Muster zum Bestimmen eines Abhängigkeitswerts zwischen den zwei Mustern;
Steuern des Telekommunikationssystems (200) zur weiteren Einstellung der bereitgestellten Ressourcen gemäß dem Abhängigkeitswert zum Bereitstellen der Ressourcen für mindestens den ersten und zweiten Satz von Telekommunikationsgeräten, wobei der Abhängigkeitswert umfasst mindestens eines aus der Anzahl der Telekommunikationsgeräte mindestens des ersten und zweiten Satzes von Telekommunikationsgeräten, die zeitlich und/oder räumlich zusammentreffen während des Betriebs; eine abgeschätzte Systemlast des Telekommunikationssystems, die verursacht wird durch den Betrieb mindestens des ersten und des zweiten Satzes von Telekommunikationsgeräten zum selben Zeitpunkt und/oder an derselben Position.

2. Verfahren nach Anspruch 1, wobei das Bestimmen des Musters (105, 205) umfasst das Vorhersagen des Betriebsstatus des ersten Satzes von Telekommunikationsgeräten (101A-C, 201) entlang des Musters (105, 205) unter Verwenden der historischen Daten, die das Betriebsverhalten des ersten Satzes von Telekommunikationsgeräten (101A-C, 201) in dem Gebiet beschreiben.

3. Verfahren nach Anspruch 1 oder 2, wobei der erste Satz von Telekommunikationsgeräten (101A-C) umfasst fahrzeugmontierte oder verbundene Telekommunikationsgeräte, wobei das Muster des ersten Satzes von Telekommunikationsgeräten (101A-C) bestimmt wird durch Verwenden von Information, die das Betriebsverhalten des Fahrzeugs (103) beschreibt.

4. Verfahren nach einem beliebigen der vorhergehenden Ansprüche, wobei das Bestimmen des Musters (105, 205) umfasst:
- Empfangen von einer Datenquelle von Daten (120), die indikativ sind für den ersten Satz von Telekommunikationsgeräten (101A-C, 201), wobei die Daten ein vorbestimmtes Format aufweisen, da der temporären und/oder räumlichen Struktur entspricht, die von der Datenquelle (120) unterstützt wird;
- Umwandeln der empfangenen Daten in ein Format, das der temporären und/oder räumlichen Struktur des Telekommunikationssystems (100, 200) entspricht; und
- Erzeugen aus den transformierten Daten das Muster (105, 205).

5. Verfahren nach einem beliebigen der vorhergehenden Ansprüche, wobei das Telekommunikationssystem (100, 200) umfasst eine Vielzahl von Basisstationen (107, 109), die entsprechende Makrozellen und Pico-Zellen bedienen, wobei das Steuern des Telekommunikationssystems umfasst:
- Auswählen einer oder mehrerer Basisstationen der Vielzahl von Basisstationen (107, 109), die den ersten Satz von Telekommunikationsgeräten (101A-C, 201) entlang des Musters (105, 205) bedienen;
- Zuweisen gemäß dem Muster (105, 205) eines Betriebsgewichtswerts zu mindestens einem Teil der einen oder mehreren Basisstationen;
- Steuern mindestens eines Parameters der einen oder der mehreren Basisstationen, sodass die eine oder die mehreren Basisstationen gemäß den Betriebsgewichtswerten funktionieren.

6. Verfahren nach Anspruch 5, wobei das Steuern des mindestens einen Parameters der einen oder der mehreren Basisstationen umfasst mindestens einen Punkt aus:
- Einschalten der ausgeschalteten Basisstationen der einen oder der mehreren Basisstationen;
- Ausschalten der eingeschalteten Basisstationen der einen oder der mehreren Basisstationen;
- Steuern der mechanischen Antenneneigenschaften der einen oder der mehreren Basisstationen;
- Steuern der Antennenstrahlen der einen oder der mehreren Basisstationen;
- Steuern des Parameters, der indikativ ist für die Sendeleistung der einen oder der mehreren Basisstationen zum Ändern der Sendeleistung;
- Spektrumsenlastung oder Kanalzuweisung zwischen Basisstationen.

7. Verfahren nach Anspruch 5 oder 6, weiterhin umfassend:
- Bestimmen nicht überlappender Zellen, die von mindestens einem Teil der einen der der mehreren Basisstationen entlang des Musters bedient werden;
- Teilen der zugewiesenen Ressourcen zwischen den Zellen als Funktion des Betriebsstatus des ersten Satzes von Telekommunikationsgeräten (101A-C, 201).

8. Verfahren nach einem beliebigen der vorhergehenden Ansprüche, wobei das Bestimmen umfasst:
- Verbinden mittels der Steuereinheit (122) mit einem Dienstleistungsserver (120);
- Anfordern beim Dienstleistungsserver (120) eines Musters des Betriebsstatus des zweiten Satzes von Telekommunikationsgeräten in mindestens einem Teil des Musters (105); wobei das Steuern des Telekommunikationssystems durchgeführt wird mittels des Betriebsstatus des ersten und des zweiten Satzes von Telekommunikationsgeräten.

9. Verfahren nach einem beliebigen der vorhergehenden Ansprüche, wobei das Muster (105, 205) weiterhin anzeigt die benötigte Ressourcenverwendung des ersten Satzes von Telekommunikationsgeräten (101A-C, 201) entlang des Musters (105, 205).

10. Verfahren nach einem beliebigen der vorhergehenden Ansprüche, weiterhin umfassend: Erkennen einer technischen Fehlfunktion in dem Bereich, der erwartungsgemäß den Betrieb des ersten Satzes von Telekommunikationsgeräten in mindestens einem Teil des Musters (105, 205) beeinträchtigen wird; erneutes Bestimmen des Musters durch Vorhersagen des Musters gemäß der technischen Fehlfunktion, wobei das Steuern des Telekommunikationssystems (100, 200) durchgeführt wird unter Verwenden des vorhergesagten Musters.

11. Verfahren nach einem beliebigen der vorhergehenden Ansprüche, wobei die Steuereinheit an einen Dienstleistungsserver angeschlossen ist, wobei das Verfahren weiterhin umfasst:
- Steuern des Dienstleistungsservers (120) zum Empfangen von Information, die das Betriebsverhalten des ersten Satzes von Telekommunikationsgeräten vom Dienstleistungsserver (120) beschreibt, wobei das Bestimmen des Musters durchgeführt wird unter Verwenden der empfangenen Information.

12. Ein Computerprogramm, umfassend Computerprogramm-Codiermittel, die angepasst sind zum Durchführen der Schritte des Verfahrens gemäß einem beliebigen der Ansprüche 1-11, wenn besagtes Programm auf einem Computer ausgeführt wird.

13. Eine Steuereinheit (122) eines Telekommunikationssystems (100, 200), das konfiguriert ist zum Durchführen eines oder mehrerer Verfahrensschritte nach den Ansprüchen 1-11.

## Revendications

1. Procédé d'allocation optimale de ressources dans un système de télécommunication (100, 200), le système de télécommunication (100, 200) comprenant une unité de commande (122) pour commander le système de télécommunication (100, 200) pour fournir des ressources afin de desservir une partie d'une zone couverte par le système de télécommunication (100, 200), le procédé comprenant les étapes suivantes : déterminer une configuration dépendant du temps et/ou de la position (105, 205) indiquant des statuts opérationnels d'un premier ensemble de dispositifs de télécommunication (101 A à C, 201) dans la zone ; dans lequel un état opérationnel d'un dispositif indique la trajectoire de déplacement et l'état « activé » ou « désactivé » du dispositif ; et commander le système de télécommunication (100, 200) pour ajuster les ressources fournies en fonction de la configuration (105, 205) pour fournir les ressources afin de desservir la partie de ladite zone ;
le procédé comprenant en outre les étapes suivantes :
déterminer une deuxième configuration (205) indiquant des états opérationnels d'au moins un deuxième ensemble de dispositifs de télécommunication (201) dans la zone ;
mettre en corrélation la première (105) et la deuxième (205) configurations pour déterminer une valeur de dépendance entre les deux configurations ;
commander le système de télécommunication (200) pour ajuster davantage les ressources fournies conformément à la valeur de dépendance afin de fournir des ressources au moins aux premier et deuxième ensembles de dispositifs de télécommunication, dans lequel la valeur de dépendance comprend au moins un dispositif de télécommunication parmi plusieurs dispositifs de télécommunication d'au moins les premier et deuxième ensembles de dispositifs de télécommunication qui, en cours de fonctionnement, coïncident dans le temps et/ou par rapport à la position ; une charge de système estimée du système de télécommunication due au fonctionnement d'au moins les premier et deuxième ensembles de dispositifs de télécommunication au même moment et/ou à la même position.

2. Procédé selon la revendication 1, dans lequel la détermination de la configuration (105, 205) comprend la prévision des états opérationnels du premier ensemble de dispositifs de télécommunication (101A à C, 201) le long de la configuration (105, 205) en utilisant des données historiques décrivant des comportements opérationnels du premier ensemble de dispositifs de télécommunication (101A à C, 201) dans la zone.

3. Procédé selon la revendication 1 ou 2, dans lequel le premier ensemble de dispositifs de télécommunication (101A à C) comprend des dispositifs de télécommunication montés sur un véhicule ou connectés à celui-ci, dans lequel la configuration du premier ensemble de dispositifs de télécommunication (101A à C) est déterminée en utilisant des informations décrivant des comportements opérationnels du véhicule (103).

4. Procédé selon l'une quelconque des revendications précédentes, dans lequel la détermination de la configuration (105, 205) comprend les étapes suivantes :
- recevoir à partir d'une source de données des données (120) indiquant le premier ensemble de dispositifs de télécommunication (101A à C, 201), les données ayant un format prédéterminé correspondant à une structure temporelle et/ou spatiale prise en charge par la source de données (120) ;
- transformer les données reçues en un format correspondant à une structure temporelle et/ou spatiale du système de télécommunication (100, 200) ; et
- générer la configuration (105, 205) à partir des données transformées.

5. Procédé selon l'une quelconque des revendications précédentes, le système de télécommunication (100, 200) comprenant une pluralité de stations de base (107, 109) desservant des macrocellules et des picocellules respectives, dans lequel la commande du système de télécommunication comprend les étapes suivantes :
- choisir une ou plusieurs stations de base parmi la pluralité de stations de base (107, 109) qui desservent le premier ensemble de dispositifs de télécommunication (101A à C, 201) le long de la configuration (105, 205) ;
- attribuer, conformément à la configuration (105, 205), une valeur pondérale de fonctionnement à au moins une partie de la station de base ou des stations de base ;
- commander au moins un paramètre de la station de base ou des stations de base de sorte que la ou les stations de base fonctionne(nt) conformément aux valeurs pondérales de fonctionnement.

6. Procédé selon la revendication 5, dans lequel la commande de l'au moins un paramètre de la station de base ou des stations de base comprend au moins une des actions suivantes :
- activer les stations de base désactivées de la station de base ou des stations de base ;
- désactiver une station de base activée de la station de base ou des stations de base ;
- commander les caractéristiques mécaniques d'antenne de la station de base ou des stations de base ;
- commander des faisceaux d'antenne de la station de base ou des stations de base ;
- commander le paramètre indiquant la puissance de transmission de la station de base ou des stations de base pour changer la puissance d'émission ;
- le déchargement spectral ou l'attribution de canal entre des stations de base ;

7. Procédé selon la revendication 5 ou 6, comprenant en outre les étapes suivantes :
- déterminer des cellules ne se chevauchant pas desservies par au moins une partie de la station de base ou des stations de base le long de la configuration ;
- partager des ressources attribuées entre les cellules en fonction des états opérationnels du premier ensemble de dispositifs de télécommunication (101A à C, 201).

8. Procédé selon l'une quelconque des revendications précédentes, la détermination comprenant :
- la connexion, au moyen de l'unité de commande (122), à un serveur de fournisseur de services (120) ;
- demander, à partir du serveur de fournisseur de services (120), une configuration d'états opérationnels du deuxième ensemble de dispositifs de télécommunication dans au moins une partie de la configuration (105) ; dans lequel la commande du système de télécommunication est exécutée en utilisant les états opérationnels du premier et du deuxième ensembles de dispositifs de télécommunication.

9. Procédé selon l'une quelconque des revendications précédentes, dans lequel la configuration (105, 205) indique en outre une utilisation des ressources requises du premier ensemble de dispositifs de télécommunication (101A à C, 201) le long de la configuration (105, 205).

10. Procédé selon l'une quelconque des revendications précédentes, comprenant en outre les étapes suivantes : détecter un dysfonctionnement technique dans la zone prévue pour affecter le fonctionnement du premier ensemble de dispositifs de télécommunication dans au moins une partie de la configuration (105, 205) ; déterminer à nouveau la configuration en prévoyant la configuration conformément au dysfonctionnement technique, dans lequel la commande du système de télécommunication (100, 200) est exécutée en utilisant la configuration prévue.

11. Procédé selon l'une quelconque des revendications précédentes, dans lequel l'unité de commande est connectée à un serveur de fournisseur de services, le procédé comprenant en outre l'étape suivante :
- commander le serveur de fournisseur de services (120) pour récupérer des informations décrivant des comportements opérationnels du premier ensemble de dispositifs de télécommunication à partir du serveur de fournisseur de services (120), dans lequel la détermination de la configuration est exécutée en utilisant les informations récupérées.

12. Programme informatique comprenant des moyens de code de programme informatique adaptés pour exécuter les étapes du procédé selon l'une quelconque des revendications 1 à 11 lorsque ledit programme est exécuté sur un ordinateur.

13. Unité de commande (122) d'un système de télécommunication (100, 200) configurée pour exécuter une ou plusieurs étapes du procédé selon les revendications 1 à 11.
